# EUROPÄISCHE PATENTSCHRIFT

(11) **EP 4 653 132 B1**
(45) Veröffentlichungstag und Bekanntmachung des Hinweises auf die Patenterteilung: **19.08.2026**
(21) Anmeldenummer: 25177964.1
(22) Anmeldetag: 21.05.2025
(51) Int. Cl.: B23Q 3/08, B23Q 17/00, B25B 11/00

(54) **VAKUUMSPANNVORRICHTUNG, AUFSPANNSYSTEM UND BEARBEITUNGSSTATION MIT PALETTENWECHSLER UND DARIN ANZUORDNENDEN VAKUUMSPANNVORRICHTUNGEN**
VACUUM CLAMPING DEVICE, CLAMPING SYSTEM AND MACHINING STATION WITH PALLET CHANGER AND VACUUM CLAMPING DEVICES TO BE MOUNTED THEREIN
DISPOSITIF DE SERRAGE SOUS VIDE, SYSTÈME DE SERRAGE ET STATION D'USINAGE AVEC CHANGEUR DE PALETTE ET DISPOSITIFS DE SERRAGE SOUS VIDE À DISPOSER DANS CEUX-CI

(30) Priorität: 22.05.2024 DE 202024102646 U
(43) Veröffentlichungstag der Anmeldung: 26.11.2025
(73) Patentinhaber: Witte Barskamp GmbH & Co. KG, 21354 Bleckede (DE)
(72) Erfinder: DÜFFERT, Jens, 21354 Bleckede (DE)
(74) Vertreter: Raffay & Fleck

(56) Entgegenhaltungen:
- AU-A1- 2011 346 997
- DE-A1- 102015 014 585
- DE-B3- 102021 102 135
- US-A1- 2019 193 250

## Beschreibung

Die vorliegende Erfindung betrifft eine Vakuumspannvorrichtung mit den Merkmalen des Oberbegriffs des Anspruchs 1. Sie betrifft ferner ein aus einer Mehrzahl solcher Vakuumspannvorrichtungen gebildetes Aufspannsystem. Sie betrifft schließlich eine Bearbeitungsstation mit einem Palettenwechsler und darin anzuordnenden Vakuumspannvorrichtungen.

Für verschiedene Zwecke in der industriellen Herstellung oder auch in der Qualitätssicherung, zum Vermessen, müssen Werkstücke in einer festen und positionsgenauen Aufspannung angeordnet werden. Dies gilt z.B. für die Bearbeitung solcher Werkstücke in einem Herstellungsprozess, z.B. bei einer Material abtragenden Bearbeitung wie Drehen, Fräsen oder Schleifen.

Neben mechanischen Aufspannungen, in denen die Werkstücke klemmend fixiert werden, z.B. mittels Spannbacken, sind auch Aufspannungen gebräuchlich, bei denen Werkstücke durch Unterdruck lagefixiert gehalten werden. Hierfür werden sog. Vakuumspannvorrichtungen verwendet. Solche Vakuumspannvorrichtungen können insbesondere für das Aufspannen von kleiner dimensionierten Werkstücken Verwendung finden und können ihrerseits wiederum mobil eingesetzt, so insbesondere mit darauf fixiertem Werkstück verbracht werden, z.B. in einen Bearbeitungsraum einer Werkstückbearbeitungsmaschine. Die Vakuumspannvorrichtungen können hierfür dann mit einem Unterdruck, mit Vakuum, beaufschlagt werden und weisen einen Vakuumspeicher auf, der mit auf einer Spannfläche ausgebildeten Vakuumführungsstrukturen, z.B. Rillen oder Nuten, verbunden ist, um so den Unterdruck, bzw. das Vakuum entlang einer Kontaktfläche des Werkstücks zu verteilen und dadurch die für das Spannen erforderliche Haltekraft aufzubringen. Über einen Vakuumanschluss kann der Vakuumspeicher mit einer Vakuumpumpe oder einer anderen Unterdruckquelle verbunden und evakuiert werden. Über ein Ventil kann dann der Vakuumanschluss geschlossen werden, und die Vakuumspannvorrichtung kann dann autark die Spannkraft halten. Eine etwaige geringe Leckage und ein dadurch begründeter Verlust von Vakuum wird über den Vakuumspeicher kompensiert. Auf diese Weise können Werkstücke auch über einen längeren Zeitraum in einer positionsfesten Aufspannung gehalten werden.

Ein Beispiel für eine solche Vakuumspannvorrichtung mit einem Vakuumspeicher ist in der DE 10 2021 102 135 B3 gezeigt und beschrieben.

Weiterhin ist es bekannt, dass in der Werkstückbearbeitung für die Bestückung von Bearbeitungsmaschinen diesen sog. Palettenwechsler zugeordnet werden, in denen auf besonderen Ablagen, bzw. Aufnahmen angeordnete, zu bearbeitende Werkstücke nach Art eines Magazins angeordnet werden. Der Palettenwechsler, der auch als zusammen mit der Bearbeitungsmaschine eine Bearbeitungsstation bildend gesehen werden kann, führt dann - in der Regel vollautomatisch - der Bearbeitungsmaschine die zu bearbeitenden Werkstücke, typischerweise zusammen mit der Ablage bzw. Aufnahme, zu. Hierzu ist eine Handhabungseinrichtung Bestandteil des Palettenwechslers, die - im Zusammenwirken mit und angesteuert von der Maschinensteuerung - die Werkstücke aus den Magazinpositionen aufnimmt und sukzessive einer Bearbeitungsposition der Bearbeitungsmaschine zuführt. Auf diese Weise kann die Bearbeitungsmaschine in einer automatisiert ablaufenden Abfolge eine Mehrzahl an Werkstücken sukzessive bearbeiten, ohne dass es eines manuellen Eingriffs einer Bedienperson zum Zuführen von Werkstücken bedarf. Eine Bearbeitungsmaschine kann so über eine Tages- oder Nachtschicht oder auch über ein Wochenende oder dergleichen laufen und betrieben werden.

Beispiel für derartige Palettenwechsler, bzw. für Bearbeitungsstationen, die solche Palettenwechsler mit integrieren sind in den Schriften DD 153 337 A5 sowie DE 20 2004 020 485 U1 offenbart.

Vakuumspannvorrichtungen können nicht nur in Situationen verwendet werden, in denen sie permanent über den Vakuumanschluss mit einer Vakuumpumpe oder einer anderen Unterdruckquelle verbunden sind und in denen dadurch der für ein sicheres Fixieren eines aufgespannten Werkstücks erforderliche Unterdruck gewährleistet wird. Hierfür ist dann der Vakuumspeicher in der gattungsgemäßen Vakuumspannvorrichtung vorgesehen. Aber selbst dann, wenn der Vakuumspeicher zum Einsatz kommt, kann es - gerade bei längeren Aufspannzeiten - dazu kommen, dass über eine Leckage in der Aufspannung das Vakuum schwindet und der Unterdruck auf ein Maß absinkt, dass eine sichere, positionsfeste Aufspannung des Werkstücks nicht mehr gewährleistet ist. Z.B. kann dies von Bedeutung sein, wenn solche Vakuumspannvorrichtungen als in einem Magazin eines Palettenwechslers einer Bearbeitungsstation abgestellte Aufnahmen für zu bearbeitende Werkstücke eingesetzt werden, wo sie mit ihren Vakuumanschlüssen nicht dauerhaft mit einer Vakuumpumpe oder einer anderen Unterdruckquelle verbunden werden können, gleichwohl aber über durchaus längere Zeiträume bereitstehen müssen, bevor sie von der Handhabungseinrichtung zur Bearbeitung des Werkstücks der Bearbeitungsmaschine zugeführt werden. Wenn dabei nun an einer Vakuumspannvorrichtung der anliegende Unterdruck unter ein kritisches Maß sinkt, also ein zu hoher Druck vorherrscht, der eine sichere Aufspannung nicht mehr gewährleistet, so dass z.B. aufgrund von beim Bearbeiten des auf dieser Vakuumspannvorrichtung aufgespannten Werkstücks auftretenden Kräften das Werkstück aus der Einspannposition verlagert wird, kann es zu Fehlern der Bearbeitung und Abweichungen von dem angestrebten Bearbeitungsergebnis kommen, so dass das Werkstück im schlimmsten Falle unbrauchbar wird und auszusortieren ist. Wenn dabei ein solcher Fehler aufgrund eines Versagens der Aufspannung auf der Vakuumspannvorrichtung zudem nicht einfach zu erkennen ist, kann es sogar vorkommen, dass ein fehlerhaftes Werkstück weiter bearbeitet oder ausgeliefert wird, obwohl es den Qualitätsansprüchen nicht genügt.

Hierbei Abhilfe zu schaffen und eine zuverlässige Aufspannung eines Werkstücks auf einer Vakuumspannvorrichtung sicherzustellen, bzw. nachzuhalten, ist Aufgabe der vorliegenden Erfindung.

Diese Aufgabe wird dabei gelöst durch eine Vakuumspannvorrichtung mit den Merkmalen des Anspruchs 1. Vorteilhafte Weiterbildungen einer erfindungsgemäßen Vakuumspannvorrichtung sind dann in den Ansprüchen 2 bis 6 angegeben. In einem weiteren Aspekt wird mit der Erfindung ein Aufspannsystem mit den Merkmalen des Anspruchs 7 angegeben. Ein weiterer Aspekt der Erfindung besteht schließlich in einer Bearbeitungsstation zum Bearbeiten eines Werkstücks mit den Merkmalen des Anspruchs 8.

Eine erfindungsgemäße Vakuumspannvorrichtung für das Aufspannen von Werkstücken weist zunächst einmal einen Korpus und eine an dem Korpus ausgebildeten Spannfläche für die Auflage eines Werkstücks oder einer mit einem Werkstück zu bestückenden Werkstückaufnahme zum Zwecke des Aufspannens auf. In dem Korpus der Vakuumspannvorrichtung ist ein Vakuumspeicher integriert. Dieser Vakuumspeicher ist mit einem außenseitig an dem Korpus vorgesehenen Vakuumanschluss verbindbar ist mit in der Spannfläche ausgebildeten Vakuumführungsstrukturen verbunden. Diese Vakuumführungsstrukturen dienen dem Verteilen des Unterdrucks entlang der Spannfläche, um so das Werkstück über eine möglichst große Auflagefläche zu fixieren. Bei diesen Strukturen kann es sich z.B. über Nuten oder offenen Kanäle handeln, die z.B. mäandrierend oder in konzentrischen Kreisen oder auch strahlförmig oder in anderer Anordnung auf der Spannfläche verteilt vorgesehen sind und die über Bohrungen oder andere Leitungsstrukturen mit dem Vakuumspeicher verbunden sind.

Insoweit und mit diesen Merkmalen stimmt die erfindungsgemäße Vakuumspannvorrichtung noch mit solchen Vakuumspannvorrichtungen überein, wie sie aus dem Stand der Technik bekannt sind, wie etwa aus der DE 10 2021 102 135 B3.

Das Besondere an der erfindungsgemäßen Vakuumspannvorrichtung ist nun, dass sie zudem einen Drucksensor zum Erfassen eines in dem Vakuumspeicher vorherrschenden Drucks, einen Datenspeicher mit einer darin gespeicherten, der Vakuumspannvorrichtung zugeordneten individuellen Identifikation und einen Sender zum drahtlosen Übermitteln der Identifikation sowie einer auf von dem Drucksensor erfassten Daten basierenden Information aufweist.

Durch diese besondere Ausgestaltung kann für die erfindungsgemäße Vakuumspannvorrichtung zunächst der in dem Vakuumspeicher vorherrschende Unterdruck überwacht werden mittels des Drucksensors. So kann bei einem von einer Vakuumpumpe oder einer anderen Unterdruckquelle getrennter Vakuumspannvorrichtung überprüft werden, ob ein in dem Vakuumspeicher vorherrschender Unterdruck ausreichend hoch, der Absolutdruck also ausreichend niedrig ist, um eine sichere Aufspannung des Werkstücks zu gewährleisten. Über den Sender können dann die auf den von dem Drucksensor erfassten, den Unterdruck in dem Vakuumspeicher betreffenden Daten basierenden Informationen drahtlos übermittelt werden, z.B. an eine zentrale Überwachungseinheit. Es können dabei die konkreten Messwerte übermittelt werden. Es kann aber auch, z.B. in einer in der Vakuumspannvorrichtung integrierten Recheneinheit ein Abgleich mit einem Sollwert für den Unterdruck, einem Schwelldruck, erfolgen und bei einem Abfallen des Unterdrucks unter den Sollwert, bzw. einem Ansteigen des Absolutdrucks über den Sollwert ein Alarmsignal über den Sender ausgegeben werden. Dadurch, dass die Vakuumspannvorrichtung gemäß der Erfindung über eine in einem Datenspeicher hinterlegte individuelle Identifikation, bzw. Kennung verfügt, die von dem Sender ebenfalls mit übermittelt werden kann, ist es auch möglich bei einer Mehrzahl von verwendeten, erfindungsgemäßen Vakuumspannvorrichtungen diejenige Vakuumspannvorrichtung eindeutig zu identifizieren, von der die übermittelten Daten stammen. So kann, wenn ein Problem in Form eines nicht mehr ausreichenden Unterdrucks anhand der von dem Sender empfangenen Signale erkannt wird, dieses Problem einer bestimmten Vakuumspannvorrichtung zugeordnet und kann diese Vakuumspannvorrichtung mit dem daran angeordneten Werkstück dann ausgesondert werden, z.B. um das Werkstück erneut und sicher aufzuspannen, entweder auf derselben oder aber auch einer anderen Vakuumspannvorrichtung.

Somit wird eine Möglichkeit geschaffen, die sichere Aufspannung von Werkstücken automatisiert zu überwachen, auch und gerade wenn diese bei von einer Vakuumpumpe oder einer anderen Unterdruckquelle isolierter Vakuumspannvorrichtung über einen längeren Zeitraum in einer sicheren Aufspannung gehalten werden sollen.

Bei einer erfindungsgemäßen Vakuumspannvorrichtung kann der Vakuumspeicher insbesondere ein in dem Korpus integrierter, tankartiger Hohlraum sein. Eine solche Gestaltung ist technisch einfach zu realisieren und erfordert, anders als der durch eine Federkonstruktion aktiv gestaltete Unterdruckspeicher bei der Vakuumspannvorrichtung gemäß der DE 10 2021 102 135 B3 keine weiteren Bauteile und Abdichtungen innerhalb des Vakuumspeichers. Auch kann die Bauform des Korpus so vergleichsweise klein und kompakt belassen werden bei gleichzeitig möglicher Ausbildung eines im Volumen als Vakuumspeicher ausreichenden Hohlraums.

Um auch eine erforderliche Energieversorgung des Drucksensors und des Senders, ggf. auch weiterer mit elektrischer Energie zu versorgender Komponenten, autark möglich zu machen, kann die erfindungsgemäße Vakuumspannvorrichtung in einer möglichen Gestaltungsvariante einen Energiespeicher zum Speichern elektrischer Energie enthalten. Dabei kann dann zudem eine Überwachungseinrichtung zum Überwachen des in dem Energiespeicher gespeicherten Energieniveaus vorsehen und kann diese Überwachungseinrichtung mit dem Sender verbunden sein und kann der Sender eingerichtet sein, eine von der Überwachungseinrichtung bereitgestellte Information betreffend das in dem Energiespeicher gespeicherte Energieniveau drahtlos zu übermitteln. So kann die Vakuumspannvorrichtung auch dahingehend überwacht werden, dass etwa die Energieversorgung für eine ordnungsgemäße Funktion des Senders und/oder des Drucksensors nicht mehr genügen könnte, so dass auch dann, wenn ein solcher Zustand auftritt, die Vakuumspannvorrichtung mit einem darauf aufgespannten Werkstück aussortiert werden kann.

Wenn, wie in einer weiteren vorteilhaften Ausgestaltung vorgesehen bei der erfindungsgemäßen Vakuumspannvorrichtung die Spannfläche auf einer Oberseite des Korpus ausgebildet ist und sie weiterhin, insbesondere an ihrem Korpus, Angriffspunkte für eine automatische Handhabungseinrichtung aufweist, kann die Vakuumspannvorrichtung insbesondere in einem Palettenwechsler einer Bearbeitungsstation für Werkstücke eingesetzt werden.

Ein weiterer Aspekt der Erfindung besteht, wie bereits erwähnt, in einem Aufspannsystem zum Aufspannen einer Mehrzahl von zu bearbeitenden Werkstücken. Dieses zeichnet sich dadurch aus, dass es wenigstens zwei, insbesondere wenigstens drei, vorzugsweise fünf oder mehr, wie vorstehend beschriebene, erfindungsgemäße Vakuumspannvorrichtungen umfasst. Die Vakuumspannvorrichtungen des Systems tragen dabei jeweils unterschiedliche Identifikationen auf ihren jeweiligen Speichern, sind also in Bezug auf deren Identifikationen individuell unterschiedlich. So können diese Vakuumspannvorrichtungen des Aufspannsystems jeweils individuell adressiert werden, kann, wenn für eine Vakuumspannvorrichtung ein zu geringer Unterdruck festgestellt wird, zugeordnet werden, welche der Vakuumspannvorrichtungen des Systems dies betrifft, und können dann gezielte Maßnahmen eingeleitet werden, wie etwa ein Aussortieren der betroffenen Vakuumspannvorrichtung, ein erneutes Aufspannen des auf dieser angeordneten Werkstücks oder dergleichen.

Schließlich besteht ein weiterer Aspekt der Erfindung auch in einer Bearbeitungsstation zum, insbesondere Material abtragenden, Bearbeiten von Werkstücken. Diese Bearbeitungsstation enthält eine einen Bearbeitungsraum aufweisende Bearbeitungsmaschine, wie etwa einen Fräs-, Dreh- oder Schleifmaschine, z.B. eine CNC-Maschine. Sie enthält ferner einen mehrere Abstellplätze für mit zu bearbeitenden Werkstücken bestückten Vakuumspannvorrichtungen sowie eine Handhabungseinrichtung zum Handhaben der mit den Werkstücken bestückten Vakuumspannvorrichtungen aufweisenden Palettenwechsler. Mit diesem Palettenwechsler können mit den zu bearbeitenden Werkstücken bestückte Vakuumspannvorrichtungen automatisch in den Bearbeitungsraum zugeführt werden.

Die Bearbeitungsstation umfasst ferner eine Mehrzahl von in dem Palettenwechsler auf den Abstellplätzen abstellbaren, wie vorstehend beschriebenen, erfindungsgemäßen Vakuumspannvorrichtungen. Diese Vakuumspannvorrichtungen haben auf ihren jeweiligen Speichern gespeichert jeweils unterschiedliche Identifikationen, sind also individuell anhand ihrer jeweils eindeutig zugeordneten Identifikation zu unterscheiden bzw. zu adressieren. Die Bearbeitungsstation weist eine Maschinensteuerung auf, die mit einem Empfänger verbunden ist, über den mit den Sendern der Vakuumspannvorrichtungen übertragene Daten drahtlos empfangen werden können. Die Maschinensteuerung ist weiterhin mit der Handhabungseinrichtung des Palettenwechslers in einer solchen Weise verbunden, dass sie die Handhabungseinrichtung zum Aufnehmen und Zuführen einer ausgesuchten, mit einem zu bearbeitenden Werkstück bestückten Vakuumspannvorrichtung ansteuern kann. Ferner ist die Maschinensteuerung dazu ausgebildet und eingerichtet, in Abhängigkeit von Informationen, die von einer jeweiligen Vakuumspannvorrichtung empfangen werden und die auf von dem Drucksensor der betroffenen Vakuumspannvorrichtung erfassten Daten basieren, zu entscheiden, ob die betreffende mit einem zu bearbeitenden Werkstück bestückte Vakuumspannvorrichtung für ein Zuführen durch die Handhabungseinrichtung in den Bearbeitungsraum ausgewählt wird oder nicht.

Insbesondere kann so eine Vakuumspannvorrichtung, bei der die korrekte und ausreichend sichere Aufspannung des Werkstücks aufgrund eines gering gewordenen Unterdrucks nicht mehr gewährleistet werden kann, unberücksichtigt bleiben. Dies kann dann z.B. in einem Bearbeitungsprotokoll der Bearbeitungsstation protokolliert werden. So kann insbesondere auch bei einem über eine zeitlich ausgedehnte Etappe erfolgende, automatische sequentielle Bearbeitung einer Mehrzahl von Werkstücken sichergestellt werden, dass die Aufspannung der Werkstücke auf den Vakuumspannvorrichtungen sicher und positionsfest erhalten bleibt, dass es bei der Bearbeitung zu keinen durch eine fehlerhafte oder nicht mehr ausreichend feste Aufspannung bedingte Fehlbearbeitung und somit zu Ausschuss kommt.

Weitere Merkmale und Vorteile der Erfindung ergeben sich für den Fachmann aus der nachstehenden Beschreibung möglicher Ausführungsformen. Dabei zeigen:
- Fig. 1: eine Aufsicht auf eine mögliche Ausgestaltungsform einer erfindungsgemäßen Vakuumspannvorrichtung von oben her auf deren Spannfläche;
- Fig. 2: eine Seitenansicht der Vakuumspannvorrichtung aus Fig. 1;
- Fig. 3: eine entlang der Schnittlinie III - III aus Fig. 2 genommene Schnittansicht der Vakuumspannplatte;
- Fig. 4: eine entlang der Schnittlinie IV - IV aus Fig. 2 genommene Schnittansicht der Vakuumspannplatte;
- Fig. 5: eine dreidimensionale Ansicht einer Vakuumspannvorrichtung gemäß den Figuren 1 bis 4 aufgesetzt auf und verbunden mit einem Maschinenadapter;
- Fig. 6: eine Schnittansicht der Anordnung aus Fig. 5; und
- Fig. 7: eine schematische Ansicht einer Bearbeitungsstation mit einem Palettenwechsler mit einer Mehrzahl von erfindungsgemäßen Vakuumspannvorrichtungen.

In den Figuren sind ein mögliche Ausgestaltungsform einer erfindungsgemäßen Vakuumspannvorrichtung sowie einer solche Vakuumspannvorrichtungen aufweisenden Bearbeitungsstation dargestellt. Diese Ausführungsvarianten werden nachfolgend unter Bezugnahme auf die Figuren eingehender beschrieben. Weiterhin werden nähere Erläuterungen zu den Erfindungsaspekten eines Aufspannsystems sowie einer Bearbeitungsstation für Werkstücke erläutert.

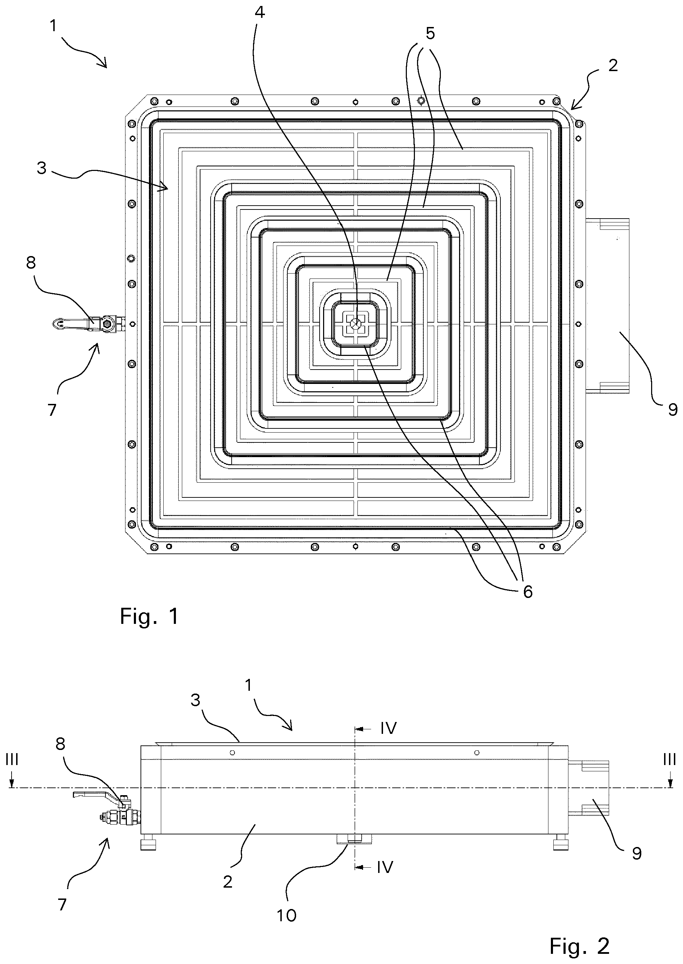

In den Fign. 1 bis 4 ist zunächst eine mögliche Ausgestaltungsvarianten einer erfindungsgemäßen Vakuumspannvorrichtung 1 gezeigt. Diese umfasst zunächst einen Korpus 2, der in dem gezeigten Ausführungsbeispiel flach quaderförmig, bzw. plattenförmig ausgeführt ist mit einer im Wesentlichen quadratischen Grundfläche. Dabei stellt diese Formgebung nicht die einzig mögliche Form dar, sondern es sind ganz verschiedene andere Formgebungen denkbar, zum Beispiel solche mit ovaler oder kreisrunder Grundfläche und auch in unterschiedlichen Höhen und dergleichen.

Auf einer Oberseite der Vakuumspannvorrichtung 1 ist eine Spannfläche 3 gebildet. Zentral in dieser Spannfläche 3 mündet eine Durchtrittsbohrung 4, die eine Durchführung für Unterdruck bildet, und die verbunden ist mit einem verzweigten System aus miteinander verbunden, in der Oberfläche eingebrachten Nuten 5. Über diese Nuten 5 wird ein über die Durchtrittsbohrung 4 anliegendes Vakuum über die Spannfläche 3 verteilt. Dabei sind an konzentrisch verlaufenden Positionen jeweils Befestigungsnuten 6 vorgesehen, in die Dichtringe eingebracht werden können, über die jeweils im Zentrum die Durchtrittsbohrung 4 aufweisende, unterschiedlich große Bereiche abgetrennt werden können, in denen ein Unterdruck gebildet wird. Auf der Spannfläche 3 kann nun ein Werkstück aufgelegt werden, mit einer Aufspannfläche zuunterst und dichtend auf einen in eine der Befestigungsnuten 6 eingesetzten Dichtring, der zugleich auch eine Abdichtung gegenüber der Aufspannfläche am Werkstück bildet. Wird nun über die zentrale Durchtrittsbohrung 4 ein Unterdruck angelegt, verteilt sich dieser über die Nuten 5 und evakuiert so einen Raum unterhalb der Aufspannfläche des Werkstücks, sodass das Werkstück fest gegen die Spannfläche 3 der Vakuumspannvorrichtung 1 gezogen wird.

Seitlich an dem Korpus 2 ist ein Vakuumanschluss 7 zu erkennen, der mit einem Ventil 8, hier einem Kugelventil, verschlossen werden kann. Auf einer dem Vakuumanschluss 7 gegenüberliegenden Seite ist an dem Korpus 2 ein Gehäuse 9 dichtend angesetzt. Auf einer Unterseite weist die Vakuumspannvorrichtung 1 einen weiteren Vakuumanschluss 10 auf.

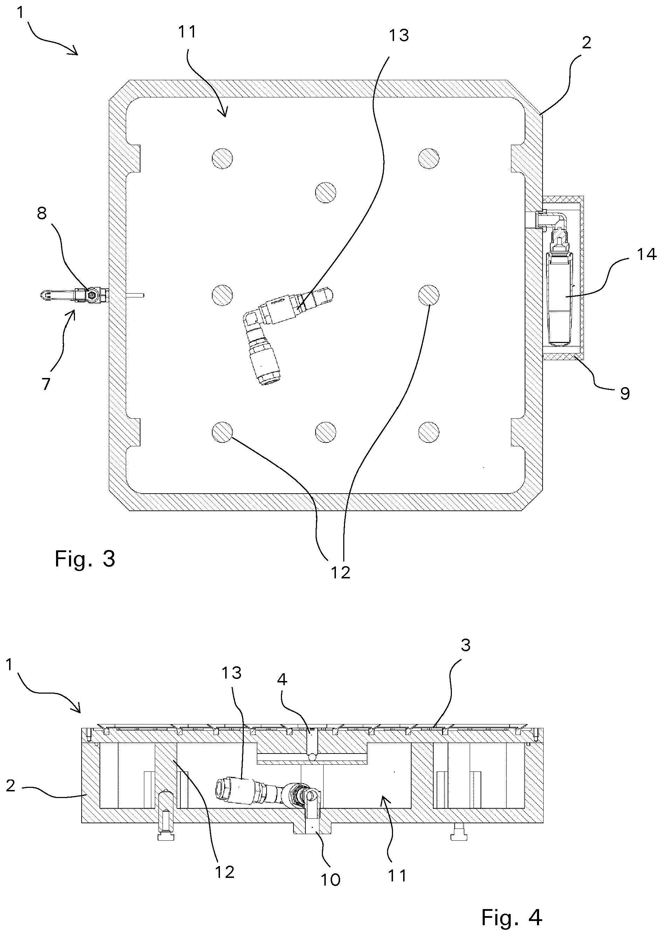

Wie insbesondere in den Schnittdarstellungen der Fign. 3 und 4 zu erkennen ist, ist im Innern des Korpus 2 der Vakuumspannvorrichtung 1 ein umfassender Hohlraum 11 ausgebildet, der als tankartiger Vakuumspeicher dient. Dieser Hohlraum 11 erstreckt sich im Wesentlichen über die gesamte Fläche und Höhe des Korpus 2 der Vakuumspannvorrichtung 1, umgeben von einer den Korpus 2 begrenzenden Außenwand. Dabei sind jedoch säulenartige Stützen 12 belassen und verteilt, die einer Abstützung und Stabilisierung der Spannfläche 3 dienen. Zu erkennen ist hier auch, insbesondere in Fig. 3, dass der Vakuumanschluss 7 in diesen Hohlraum 11 mündet. Weiterhin ist zu erkennen, dass auch der weitere Vakuumanschluss 10 in den Hohlraum 11 mündet (vergleiche Fig. 4), wobei hier eine Rückschlagventilanordnung 13 vorgesehen ist, die lediglich ein Evakuieren des Hohlraums 11 erlaubt, die jedoch ein Zuströmen von Luft in den Hohlraum 11 verhindert.

Erkennen ist schließlich auch, dass in dem Gehäuse 9 ein Drucksensor 14 angeordnet ist, der zum Erfassen des in dem Hohlraum 11 vorherrschenden (Unter-) Drucks mit ebendiesem Hohlraum 11 in Verbindung steht.

Der Drucksensor 14 ist mit einem direkt daran gekoppelten Sender (hier nicht näher bezeichnet) ausgestattet, der von den Drucksensor 14 erfasste Druckdaten drahtlos übermitteln kann. Dieser Sender übermittelt dabei zudem eine diesem aufgeprägte, ihm in einem Speicher zugeordnete individualisierte Kennung und erlaubt so eine Zuordnung der übermittelten Daten zu diesem Sender und darüber zu dem Drucksensor 14 und somit auch zu der mit diesem Drucksensor 14 ausgestatteten Vakuumspannvorrichtung 1.

Die in den Fign. 1 bis 4 gezeigte Vakuumspannvorrichtung 1 funktioniert nun wie folgt:
Zunächst wird ein in seiner Größe zu der Aufspannfläche des aufzunehmenden Werkstücks korrespondierender Bereich auf der Spannfläche 3 ausgewählt und entsprechend durch Einlegen eines Dichtrings in eine der Befestigungsnuten 6 bestimmt. Sodann wird das aufzuspannende Werkstück in der gewünschten Positionierung mit seiner Aufspannfläche auf dem Dichtring abgelegt und es wird über einen der Vakuumanschlüsse 7 oder 10 ein Unterdruck angelegt. Dadurch wird der Hohlraum 11 evakuiert, wobei der entstehende Unterdruck durch die Durchtrittsbohrung 4 in Richtung der Spannfläche 3 weitergeleitet wird und von dort verteilt wird über die Nuten 5, sodass das Werkstück auf der Spannfläche 3 fest angesaugt und so fixiert wird. Ist das Vakuum dabei über den Vakuumanschluss 7 angelegt worden, war zuvor das Ventil 8 zu öffnen. Ist ein ausreichender Unterdruck in dem Hohlraum 11 erreicht, kann dann das Ventil 8 geschlossen und kann die Unterdruckquelle, zum Beispiel eine Vakuumpumpe, von dem Vakuumanschluss 7 getrennt werden. Alternativ kann ein Evakuieren auch über den Vakuumanschluss 10 erfolgen, der insbesondere dafür eingerichtet und geeignet ist, mit einem Evakuierungsanschluss in einer Aufnahme, in die die Vakuumspannvorrichtung 1 eingesetzt werden kann, zusammengefügt zu werden, wobei hier über den Evakuierungsanschluss auch permanent ein Vakuum, bzw. ein Unterdruck anliegen kann, sodass der Hohlraum 11 durchgehend evakuiert wird. Die Rückschlagventilanordnung 13 sorgt dabei dafür, dass über den Vakuumanschluss 10 keine Luft in das Innere des Hohlraums 11 nachströmen kann. Ein Belüften erfolgt ausschließlich über den Vakuumanschluss 7, indem das Ventil 8 geöffnet wird.

Ist der Unterdruck in dem Hohlraum 11 ausreichend und ist das Werkstück damit auf der Spannfläche 3 sicher festgelegt, wird der in dem Hohlraum 11 vorherrschende Unterdruck über den Drucksensor 14 überwacht und werden die Messwerte des Drucksensors 14 über den darin integrierten Sender drahtlos übermittelt. Der Sender kann dabei so eingestellt sein, dass er eine permanente Übermittlung vornimmt oder aber getaktet, oder aber auch nur getriggert aufgrund einer Abfrage. Der Drucksensor 14 ist dabei mit einer Energiespeichereinheit versehen und versorgt, die die benötigte elektrische Energie bereitstellt. Auch diese Energiespeichereinheit kann hinsichtlich der darin gespeicherten Energiemenge mit einer Sensorik überwacht sein, wobei auch diese Sensorik mit dem Sender verbunden sein kann, sodass auch Informationen über einen möglichen niedrigen Energiestatus der Energiespeichereinheit drahtlos übermittelt werden können.

Es können nun mehrere Vakuumspannvorrichtungen 1, wie sie in den Figuren 1 bis 4 gezeigt ist, miteinander zu einem Aufspannsystem kombiniert werden, wobei dann die individualisierenden Kennungen, die hier in dem dem Drucksensor 14 zugeordneten Sender integriert gespeichert sind, sich jeweils unterscheiden. So kann in einem solchen Aufspannsystem ein die Daten der verschiedenen den jeweiligen Drucksensoren 14 zugeordneten Sendern empfangender Empfänger und eine dahinterstehende Datenverarbeitungseinheit feststellen und erkennen, welche Daten von welcher der Vakuumspannvorrichtungen 1 gesendet worden sind. Ergibt dabei eine solche Datenübermittlung, dass für eine der Vakuumspannvorrichtungen 1 der von dem zugehörigen Drucksensor 14 ermittelte Unterdruck nicht mehr ausreicht, um eine sichere Aufspannung des darauf aufgespannten Werkstücks zu gewährleisten, so kann dies festgestellt und kann ein entsprechendes Alarmsignal ausgelöst werden, welches dann wiederum eine angepasste Reaktion ermöglicht, zum Beispiel ein Aussortieren der betroffenen Vakuumspannvorrichtung 1 mit dem darauf befindlichen Werkstück durch eine Bedienperson oder dergleichen.

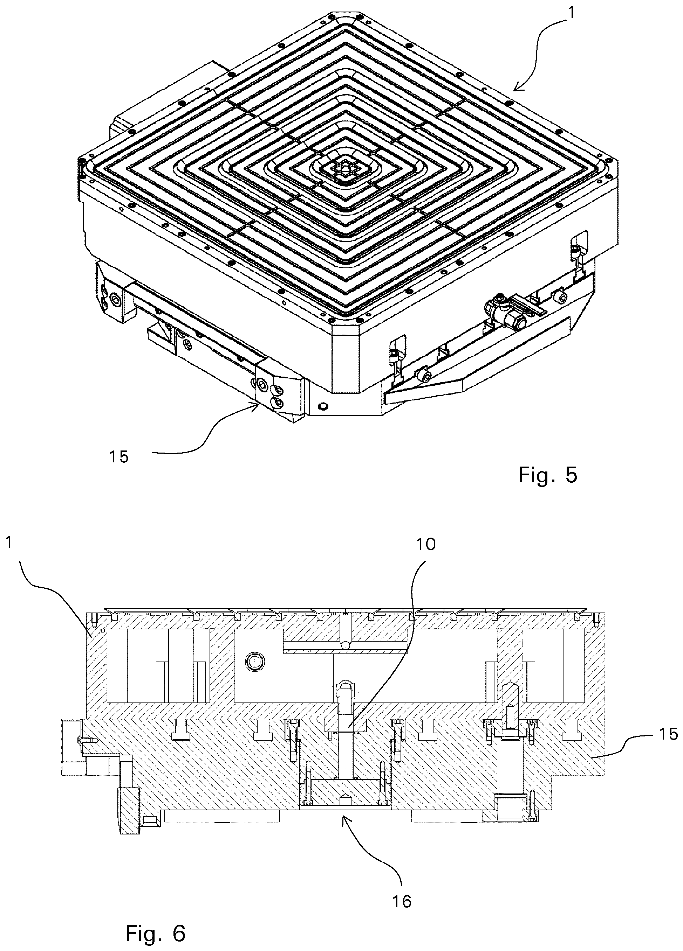

In den Fign. 5 und 6 ist in zwei verschiedenen Ansichten, einer dreidimensionalen Ansicht (Fig. 5) und einer Schnittansicht (Fig. 6) eine Anordnung gezeigt, in der eine wie vorstehend beschriebene und in den Fign. 1 bis 4 gezeigte Vakuumspannvorrichtung mit einem Maschinenadapter 15 verbunden ist. Ein solcher Maschinenadapter dient insbesondere einer Anpassung der Geometrien von Fixierungselementen und Anschlüssen, so insbesondere einer Vakuumversorgung, an die in der Regel für die verschiedenen Systeme, insbesondere Palettenwechsler und Bearbeitungsmaschinen der unterschiedlichen Anbieter, unterschiedlich gestalteten Aufnahmen. So kann ein solcher Maschinenadapter 15 oberseitig mit einer Anschluss- und Übergabestruktur zum Verbinden mit der Vakuumspannvorrichtung 1 ausgestaltet sein, auf seiner Unterseite 16 entsprechend passend für eine spezifische Aufnahme und Medienübergabe, insbesondere einen Vakuumanschluss, eines ausgesuchten Systems gestaltet sein, in dem die Vakuumspannvorrichtung eingesetzt werden soll. Im Innern des Maschinenadapters 15 wird dann insbesondere die Zuleitung des Vakuumanschlusses von der Unterseite 16 zu dem zentralen Vakuumanschluss 10 auf der Unterseite der Vakuumspannvorrichtung bewirkt und umgesetzt.

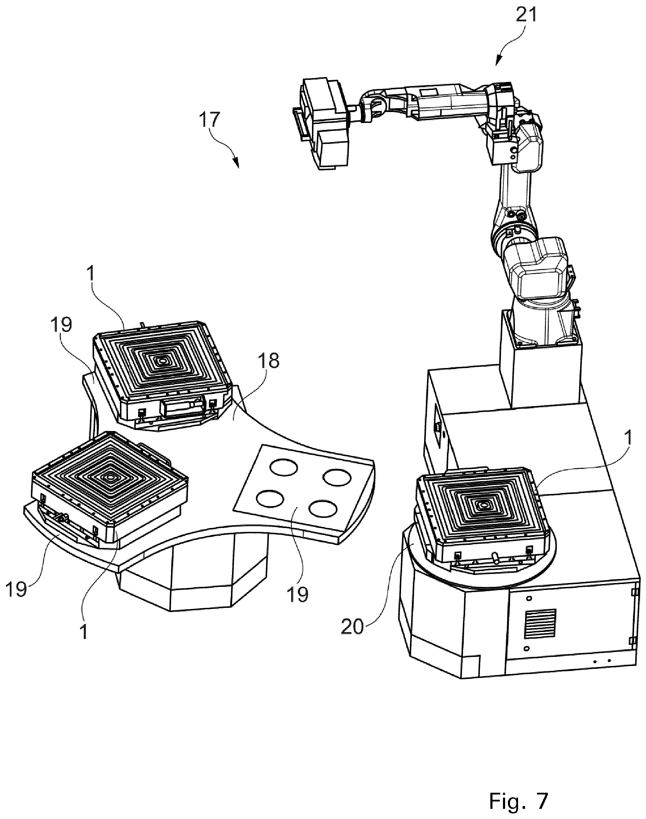

Ein derartiges Aufspannsystem, wie vorstehend beschriebene Vakuumspannvorrichtungen 1 können nun als Bestandteil einer wie beispielhaft in Fig. 7 gezeigten Bearbeitungsstation 17 für das Bearbeiten von Werkstücken eingesetzt werden.

Ein solche Bearbeitungsstation 17 umfasst zunächst eine eigentliche Bearbeitungsmaschine, insbesondere eine Material abtragende Bearbeitungsmaschine, wie eine Fräs-, Dreh- oder Schleifmaschine, wobei es sich insbesondere um eine CNC-Maschine handeln kann. Diese Bearbeitungsmaschine ist hier nicht näher dargestellt. Sie hat einen Bearbeitungsraum, in dem die zu bearbeitenden Werkstücke in einer definierten Aufspannung und Ausrichtung angeordnet und dann bearbeitet werden.

Weiterhin umfasst die Bearbeitungsstation 17 einen Palettenwechsler 18 mit einem mehrere Abstellplätze 19 aufweisenden Magazin zum Abstellen von Vakuumspannvorrichtungen 1 mit darauf aufgespannten und durch anliegenden Unterdruck gehaltenen Werkstücken. In dem gezeigten Beispiel sind hier drei solche Abstellplätze 19 auf dem Palettenwechsler 18 dargestellt. Es können aber auch Abstellplätze 19 in einer anderen Anzahl, z.B. vier, fünf, sechs oder mehr, vorgesehen sein. Der Palettenwechsler 18, bzw. die Bearbeitungsstation 17 hat eine Handhabungseinrichtung 21 die die Vakuumspannvorrichtungen 1 mit darauf festgelegtem Werkstück erfassen und von einem Abstellplatz 19 zu der Bearbeitungsmaschine, z.B. in deren Bearbeitungsraum oder zu einem Handler der Bearbeitungsmaschine selbst, verbringen kann und umgekehrt. Insbesondere kann die Handhabungseinrichtung 21, bei der es sich insbesondere um einen Roboterarm mit eine Robotergreifer handeln kann, die Vakuumspannvorrichtungen 1 jeweils auf einem Bearbeitungsplatz 20 absetzen und dort passgenau positionieren. Der Palettenwechsler 18 der Bearbeitungsstation 17 dient also gleichermaßen als Speicher für Werkstücke, aus dem die Bearbeitungsmaschine die vorbereiteten Werkstücke nacheinander ohne einen Eingriff durch eine Bedienperson abarbeiten kann, z.B. auch über Nacht oder am Wochenende.

Wenn die Werkstücke nicht außerhalb des Palettenwechslers 18 auf den Vakuumspannrichtungen 1 aufgelegt und gespannt werden, so ist auf dem Palettenwechsler 17 mindestens ein Rüstplatz auf dem die Werkstücke aufgelegt und gespannt werden, mit Vakuum versorgt, das dann über einen der Vakuumanschlüsse 8 oder 10 auf die Vakuumspannvorrichtung 1 aufgebracht werden kann. In der gezeigten Ausführungsform sind daher die Aufspannvorrichtungen 1 in einer wie in den Figuren 5 und 6 gezeigten Weise mit dem dort dargestellten Maschinenadapter 15 verbunden, so dass sie mit den spezifischen Gestaltungen der Aufnahmen an den Abstellplätzen 19 des Palettenwechslers 18 und auch an dem Bearbeitungsplatz 20 zusammenpassen, insbesondere auch einer Vakuumversorgung an dem Rüstplatz des Palettenwechslers 18. In der Regel sind bei dem Palettenwechsler 18 aber nicht alle Abstellplätze bzw. Stationen mit Vakuum versorgt und auch bei der Übergabe an die Bearbeitungsmaschine ist eine Vakuumversorgung unterbrochen. Durch den Vakuumspeicher 11 bleibt das Werkstück auch ohne Vakuumversorgung auf der Vakuumspannvorrichtung 1 gespannt. Ein ausreichendes Vakuum kann so z.B. über bis zu 90 Stunden aufrechterhalten werden.

Die Drucksensoren 14 überwachen dabei das Vakuum in dem als Vakuumspeicher dienenden Hohlraum 11 der jeweiligen Vakuumspannvorrichtung 1. Daten zu dem jeweils erfassten Druck, z.B. der gemessene Druckwert als solcher, werden per Funksignal an die Steuerung der Bearbeitungsmaschine, bzw. der Bearbeitungsstation 17 übergeben. Wird dabei ein Abfallen des Vakuums in einer der Vakuumspannvorrichtungen 1 festgestellt, wird dabei insbesondere ein festgelegter Schwellwert unterschritten, wird eine Warnung ausgegeben. Das Werkstück ist dann nicht mehr sicher gespannt und die Bearbeitung auf der Bearbeitungsmaschine wird gestoppt, bzw. es wird der Palettenwechsler 18 von der Maschinensteuerung angewiesen, die als nicht mehr ausreichend evakuiert erkannte Vakuumspannvorrichtung 1 und das darauf angeordnete Werkstück auszusparen und mit einer anderen, als ausreichend evakuiert erkannten Vakuumspannvorrichtung 1 und dem darauf gespannten Werkstück fortzufahren. Typischerweise ist in dem Bearbeitungsraum der Bearbeitungsmaschine an dem Bearbeitungsplatz 20 ein Maschinentisch vorgesehen, der einen Evakuierungsanschluss aufweist, insbesondere zur Kopplung mit dem Vakuumanschluss 10.

### Bezugszeichenliste

- 1: Vakuumspannvorrichtung
- 2: Korpus
- 3: Spannfläche
- 4: Durchtrittsbohrung
- 5: Nut
- 6: Befestigungsnut
- 7: Vakuumanschluss
- 8: Ventil
- 9: Gehäuse
- 10: Vakuumanschluss
- 11: Hohlraum
- 12: Stütze
- 13: Rückschlagventilanordnung
- 14: Drucksensor
- 15: Maschinenadapter
- 16: Unterseite
- 17: Bearbeitungsstation
- 18: Palettenwechsler
- 19: Abstellplatz
- 20: Bearbeitungsplatz
- 21: Handhabungseinrichtung

## Patentansprüche

1. Vakuumspannvorrichtung (1) für das Aufspannen von Werkstücken mit
• einem Korpus (2) und
• einer an dem Korpus (2) ausgebildeten Spannfläche (3) für die Auflage eines Werkstücks oder einer mit einem Werkstück zu bestückenden Werkstückaufnahme zum Zwecke des Aufspannens,
wobei in dem Korpus (2) ein Vakuumspeicher (11) integriert ist, der mit einem außenseitig an dem Korpus (2) vorgesehenen Vakuumanschluss (7, 10) verbindbar und der mit in der Spannfläche (3) ausgebildeten Vakuumführungsstrukturen (5) verbunden ist,
**dadurch gekennzeichnet,**
**dass** die Vakuumspannvorrichtung (1) weiterhin folgendes aufweist:
• einen Drucksensor (14) zum Erfassen eines in dem Vakuumspeicher (11) vorherrschenden Drucks,
• einen Datenspeicher mit einer darin gespeicherten, der Vakuumspannvorrichtung (1) zugeordneten individuellen Identifikation,
• einen Sender zum drahtlosen Übermitteln der Identifikation sowie einer auf von dem Drucksensor (14) erfassten Daten basierenden Information.

2. Vakuumspannvorrichtung (1) nach Anspruch 1, **dadurch gekennzeichnet, dass** in dem Datenspeicher ein Schwelldruck hinterlegt ist und dass der Vakuumspeicher (11) eine Steuerung umfasst, die eingerichtet ist, den mit dem Drucksensor (14) erfassten Druck mit dem Schwelldruck zu vergleichen und, dann, wenn der mit dem Drucksensor (14) erfasste Druck den Schwelldruck übersteigt, den Sender zum drahtlosen Übermitteln einer entsprechenden Information anzusteuern.

3. Vakuumspannvorrichtung (1) nach einem der vorhergehenden Ansprüche, **dadurch gekennzeichnet, dass** der Vakuumspeicher (11) ein in dem Korpus (2) integrierter, tankartiger Hohlraum ist.

4. Vakuumspannvorrichtung (1) nach einem der vorhergehenden Ansprüche, **dadurch gekennzeichnet, dass** sie einen Energiespeicher zum Speichern elektrischer Energie für die Versorgung jedenfalls des Drucksensors (14) und des Senders, ggf. auch weiterer mit elektrischer Energie zu versorgender Komponenten, enthält.

5. Vakuumspannvorrichtung (1) nach Anspruch 4, **gekennzeichnet durch** eine Überwachungseinrichtung zum Überwachen des in dem Energiespeicher gespeicherten Energieniveaus, wobei die Überwachungseinrichtung mit dem Sender verbunden und der Sender eingerichtet ist, eine von der Überwachungseinrichtung bereitgestellte Information betreffend das in dem Energiespeicher gespeicherte Energieniveau drahtlos zu übermitteln.

6. Vakuumspannvorrichtung (1) nach einem der vorhergehenden Ansprüche, **dadurch gekennzeichnet, dass** die Spannfläche (3) auf einer Oberseite des Korpus (2) ausgebildet ist und dass die Vakuumspannvorrichtung (1), insbesondere deren Korpus (2), Angriffspunkte für eine automatische Handhabungseinrichtung aufweist.

7. Aufspannsystem zum Aufspannen einer Mehrzahl von zu bearbeitenden Werkstücken, **dadurch gekennzeichnet, dass** es wenigstens zwei, insbesondere wenigstens drei, vorzugsweise fünf oder mehr, Vakuumspannvorrichtungen (1) nach einem der Ansprüche 1 bis 6 umfasst, wobei die Vakuumspannvorrichtungen (1) des Aufspannsystems jeweils unterschiedliche Identifikationen auf ihren jeweiligen Datenspeichern gespeichert tragen.

8. Bearbeitungsstation (17) zum, insbesondere Material abtragenden, Bearbeiten von Werkstücken mit einer einen Bearbeitungsraum aufweisenden Bearbeitungsmaschine, einem Palettenwechsler (18) mit mehreren Abstellplätzen (19) für mit zu bearbeitenden Werkstücken bestückten Vakuumspannvorrichtungen (1), sowie eine Handhabungseinrichtung (21) zum Handhaben der mit den Werkstücken bestückten Vakuumspannvorrichtungen (1) zum automatischen Zuführen von mit den zu bearbeitenden Werkstücken bestückten Vakuumspannvorrichtungen (1) in den Bearbeitungsraum, **dadurch gekennzeichnet, dass** die Bearbeitungsstation (17) eine Mehrzahl von in dem Palettenwechsler (18) auf den Abstellplätzen (19) abstellbaren Vakuumspannvorrichtungen (1) gemäß einem der Ansprüche 1 bis 6 mit jeweils auf ihren jeweiligen Datenspeichern gespeichert unterschiedlichen Identifikationen aufweist, wobei die Bearbeitungsstation (17) eine Maschinensteuerung aufweist, die mit einem Empfänger verbunden ist zum drahtlosen Empfangen von mit den Sendern der Vakuumspannvorrichtungen (1) übertragenen Daten und die mit der Handhabungseinrichtung (21) des Palettenwechslers (18) in einer Weise verbunden ist, diese zum Aufnehmen und Zuführen einer ausgesuchten, mit einem zu bearbeitenden Werkstück bestückten Vakuumspannvorrichtung (1) anzusteuern, wobei die Maschinensteuerung dazu ausgebildet und eingerichtet ist, abhängig von einer jeweiligen Vakuumspannvorrichtung (1) empfangenen auf von deren Drucksensor (14) erfassten Daten basierenden Informationen eine Auswahl zu treffen, die betreffende mit einem zu bearbeitenden Werkstück bestückte Vakuumspannvorrichtung (1) für ein Zuführen durch die Handhabungseinrichtung (21) in den Bearbeitungsraum auszuwählen oder nicht.

## Claims

1. Vacuum clamping device (1) for clamping workpieces, comprising
• a body (2) and
• a clamping surface (3) formed on the body (2) for supporting a workpiece or a workpiece holder to be fitted with a workpiece for the purpose of clamping,
wherein a vacuum reservoir (11) is integrated into the body (2), which can be connected to a vacuum connection (7, 10) provided on the outside of the body (2) and which is connected to vacuum guide structures (5) formed in the clamping surface (3), **characterised in**
**that** the vacuum clamping device (1) further comprises:
• a pressure sensor (14) for detecting the pressure prevailing in the vacuum reservoir (11),
• a data memory containing an individual identification assigned to the vacuum clamping device (1),
• a transmitter for wirelessly transmitting the identification and information based on data detected by the pressure sensor (14).

2. Vacuum clamping device (1) according to claim 1, **characterised in that** a threshold pressure is stored in the data memory and **in that** the vacuum reservoir (11) comprises a control unit which is configured to compare the pressure detected by the pressure sensor (14) with the threshold pressure and, if the pressure detected by the pressure sensor (14) exceeds the threshold pressure, to activate the transmitter to wirelessly transmit corresponding information.

3. Vacuum clamping device (1) according to one of the preceding claims, **characterised in that** the vacuum reservoir (11) is a tank-like cavity integrated into the body (2).

4. Vacuum clamping device (1) according to one of the preceding claims, **characterised in that** it comprises an energy storage unit for storing electrical energy to supply at least the pressure sensor (14) and the transmitter, and, where applicable, other components requiring a supply of electrical energy.

5. Vacuum clamping device (1) according to claim 4, **characterised by** a monitoring device for monitoring the energy level stored in the energy storage unit, wherein the monitoring device is connected to the transmitter and the transmitter is configured to wirelessly transmit information provided by the monitoring device concerning the energy level stored in the energy storage unit.

6. Vacuum clamping device (1) according to one of the preceding claims, **characterised in that** the clamping surface (3) is formed on an upper side of the body (2) and **in that** the vacuum clamping device (1), in particular its body (2), has attachment points for an automatic handling device.

7. Clamping system for clamping a plurality of workpieces to be machined, **characterised in that** it comprises at least two, in particular at least three, preferably five or more, vacuum clamping devices (1) according to any one of claims 1 to 6, wherein the vacuum clamping devices (1) of the clamping system each have different identifiers stored in their respective data storage units.

8. Machining station (17) for machining workpieces-in particular by material removal-using a machining centre having a machining space, a pallet changer (18) with several storage positions (19) for vacuum clamping devices (1) loaded with workpieces to be machined, and a handling device (21) for handling the vacuum clamping devices (1) loaded with the workpieces, for the automatic feeding of vacuum clamping devices (1) loaded with the workpieces to be machined into the machining chamber,
**characterised in that** the machining station (17) comprises a plurality of vacuum clamping devices (1) in accordance with one of claims 1 to 6, each having a different identification stored in its respective data memory, wherein the machining station (17) comprises a machine control system connected to a receiver for the wireless reception of data transmitted by the transmitters of the vacuum clamping devices (1) and which is connected to the handling device (21) of the pallet changer (18) in such a way as to control it to pick up and feed a selected vacuum clamping device (1) loaded with a workpiece to be machined, wherein the machine control system is designed and configured to make a selection, depending on a respective vacuum clamping device (1) based on data detected by its pressure sensor (14), to decide whether or not to select the relevant vacuum clamping device (1), loaded with a workpiece to be machined, for feeding into the machining area by the handling device (21).

## Revendications

1. Dispositif de serrage à vide (1) destiné à serrer des pièces, comprenant
• un corps (2) et
• une surface de serrage (3) formée sur le corps (2) pour supporter une pièce à usiner ou un porte-pièce destiné à recevoir une pièce à usiner en vue de son serrage,
dans lequel un réservoir à vide (11) est intégré dans le corps (2), lequel peut être raccordé à un raccord à vide (7, 10) prévu à l'extérieur du corps (2) et qui est relié à des structures de guidage en translation à vide (5) formées dans la surface de serrage (3), caractérisé en ce
le fait que le dispositif de serrage à vide (1) comprend en outre:
• un capteur de pression (14) destiné à détecter la pression régnant dans le réservoir à vide (11),
• une mémoire de données contenant une identification individuelle attribuée au dispositif de serrage à vide (1),
• un émetteur destiné à transmettre sans fil l'identifiant et des informations basées sur les données détectées par le capteur de pression (14).

2. Dispositif de serrage à vide (1) selon la revendication 1, **caractérisé en ce qu'**une pression seuil est stockée dans la mémoire de données et **en ce que** le réservoir à vide (11) comprend une unité de commande qui est configurée pour comparer la pression détectée par le capteur de pression (14) à la pression seuil et, si la pression détectée par le capteur de pression (14) dépasse la pression seuil, pour activer l'émetteur afin de transmettre sans fil les informations correspondantes.

3. Dispositif de serrage à vide (1) selon l'une des revendications précédentes, **caractérisé en ce que** le réservoir à vide (11) est une cavité en forme de cuve intégrée dans le corps (2).

4. Dispositif de serrage à vide (1) selon l'une des revendications précédentes, **caractérisé en ce qu'**il comprend une unité de stockage d'énergie destinée à stocker de l'énergie électrique pour alimenter au moins le capteur de pression (14) et l'émetteur, ainsi que, le cas échéant, d'autres composants nécessitant une alimentation en énergie électrique.

5. Dispositif de serrage à vide (1) selon la revendication 4, **caractérisé par** un dispositif de surveillance destiné à surveiller le niveau d'énergie stocké dans l'unité de stockage d'énergie, dans lequel le dispositif de surveillance est connecté au transmetteur et le transmetteur est configuré pour transmettre sans fil des informations fournies par le dispositif de surveillance concernant le niveau d'énergie stocké dans l'unité de stockage d'énergie.

6. Dispositif de serrage à vide (1) selon l'une des revendications précédentes, **caractérisé en ce que** la surface de serrage (3) est formée sur une face supérieure du corps (2) et **en ce que** le dispositif de serrage à vide (1), en particulier son corps (2), comporte des points de fixation pour un dispositif de manutention automatique.

7. Système de serrage destiné à serrer une pluralité de pièces à usiner, **caractérisé en ce qu'**il comprend au moins deux, en particulier au moins trois, de préférence cinq ou plus, dispositifs de serrage à vide (1) selon l'une quelconque des revendications 1 à 6, dans lequel les dispositifs de serrage à vide (1) du système de serrage possèdent chacun des identifiants différents stockés dans leurs unités de stockage de données respectives.

8. Station d'usinage (17) destinée à l'usinage de pièces - en particulier par enlèvement de matière - à l'aide d'un centre d'usinage comportant un espace d'usinage, un changeur de palettes (18) comportant plusieurs positions de stockage (19) pour des dispositifs de serrage à vide (1) chargés de pièces à usiner, et un dispositif de manutention (21) destiné à manipuler les dispositifs de serrage à vide (1) chargés des pièces, pour l'alimentation automatique des dispositifs de serrage à vide (1) chargés des pièces à usiner dans la chambre d'usinage,
**caractérisée en ce que** la station d'usinage (17) comprend une pluralité de dispositifs de serrage à vide (1) selon l'une des revendications 1 à 6, chacun comportant une identification différente stockée dans sa mémoire de données respective, la station d'usinage (17) comprenant un système de commande de machine relié à un récepteur pour la réception sans fil de données transmises par les émetteurs des dispositifs de serrage à vide (1) et qui est relié au dispositif de manutention (21) du changeur de palettes (18) de manière à le commander pour qu'il prélève et achemine un dispositif de serrage à vide (1) sélectionné, chargé d'une pièce à usiner, le système de commande de la machine étant conçu et configuré pour effectuer une sélection, en fonction d'un dispositif de serrage à vide (1) respectif sur la base des données détectées par son capteur de pression (14), afin de décider s'il convient ou non de sélectionner le dispositif de serrage à vide (1), chargé d'une pièce à usiner, pour l'acheminer vers la zone d'usinage par le dispositif de manutention (21).
